# EUROPEAN PATENT APPLICATION

(11) **EP 2 484 735 A1**
(43) Date of publication of application: **08.08.2012**
(21) Application number: 12153966.2
(22) Date of filing: 06.02.2012
(51) Int. Cl.: C09J 7/02, C09J 123/20

(54) **Adhesive tape for surface protection**

(30) Priority: 04.02.2011 JP 2011023336; 13.12.2011 JP 2011272120
(71) Applicant: Nitto Denko Corporation, Ibaraki-shi, Osaka 567-8680 (JP)
(72) Inventor: Iseki, Toru, Ibaraki-shi, Osaka 567-8680 (JP); Igarashi, Takeshi, Ibaraki-shi, Osaka 567-8680 (JP)
(74) Representative: Grünecker, Kinkeldey, Stockmair & Schwanhäusser

(57) **Abstract**

The present invention provides an adhesive tape for surface protection, comprising a substrate and an adhesive layer laminated on at least one surface of the substrate, wherein the adhesive layer is made of an adhesive comprising a polyolefin (a), a hydroxyl group-containing polyolefin (b) and a crosslinking agent (c) having a functional group capable of reacting with the hydroxyl group.

## Description

### Technical Field

The present invention relates to an adhesive tape for applications wherein the tape is adhered to an adherend to protect the surface of the adherend and, when the protection is no longer necessary, is removed from the adherend (hereinafter sometimes abbreviated as "an adhesive tape for surface protection").

### Background Art

It is a well-known practice to adhere an adhesive tape for surface protection to an adherend (e.g., steel and other metal plates, moldings thereof, coatings for mobile phones and the like, as well as painted airplanes, electric trains, automobiles, bicycles, parts thereof and the like) to protect the surface of the adherend during transportation, storage, curing, work execution and the like. Such an adhesive tape for surface protection is removed from the adherend after finishing its role as a protectant.

Adhesive tapes for surface protection must not undergo a phenomenon wherein a portion or all of the adhesive layer remains on the surface of the adherend when the tape is peeled from the adherend (so-called adhesive deposit). Disclosed techniques for preventing the adhesive deposit include using a weathering agent to prevent the deterioration of the adhesive layer (patent document 1), placing a specified anchoring agent between a substrate and an adhesive layer (patent document 2), and improving the detachability by defining a weight average molecular weight and degree of dispersion of the base polymer constituting the adhesive layer within respective specified ranges (patent document 3). However, to further increase the Commercial value of adherends, there is a demand for further prevention of adhesive deposit for adhesive tapes for surface protection.

Polyolefin-based adhesives containing polyolefin (particularly rubber-based adhesives containing a rubber such as polyisobutylene) are often used to form adhesive layers for adhesive tapes for surface protection. However, polyolefin-based adhesives and rubber-based adhesives are known to have poor adhesiveness to ordinary substrates (e.g., polyester substrates, polyolefin substrates) ("adhesiveness to substrates" is hereinafter sometimes abbreviated as "an anchor property"). Disclosed techniques for improving the anchor property include, for example, interlaying an undercoat layer between a rubber-based adhesive layer and a substrate (support) (patent document 4). However, addition of an undercoat layer is undesirable since a step and equipment therefor are necessary.

### [Document List]

### [patent documents]

patent document 1: JP-A-2007-238746
patent document 2: JP-A-2005-213280
patent document 3: JP-A-10-176152
patent document 4: JP-A-4-370179

### [Summary of the Invention]

### Problems to Be Solved by the Invention

Developed with a focus on the above-described circumstances, the present invention intends to provide an adhesive tape for surface protection that allows adhesive deposits to be prevented effectively and ensures good adhesiveness of the adhesive layer to the substrate even in the absence of an undercoat layer.

### Means of Solving the Problems

The present inventors conducted extensive investigations and found that the above-described object could be accomplished by using an adhesive tape for surface protection having an adhesive layer formed with an adhesive containing a polyolefin (a), a hydroxyl group-containing polyolefin (b) and a crosslinking agent (c) having a functional group capable of reacting with the hydroxyl group. The present invention based on this finding is as follows.

[1] An adhesive tape for surface protection, comprising a substrate and an adhesive layer laminated on at least one surface of the substrate, wherein the adhesive layer is made of an adhesive comprising a polyolefin (a), a hydroxyl group-containing polyolefin (b) and a crosslinking agent (c) having a functional group capable of reacting with the hydroxyl group.
[2] The adhesive tape according to [1] above, wherein the crosslinking agent (c) is an isocyanate.
[3] The adhesive tape according to [1] or [2] above, wherein the content of the crosslinking agent (c) in the adhesive is 0.01 to 150 parts by weight relative to 100 parts by weight of the polyolefin (a).
[4] The adhesive tape according to any one of [1] to [3] above, wherein the value of A represented by the following formula (I) is 0.25 to 14250.
   A = hydroxyl value (mg KOH/g) of hydroxyl group-containing polyolefin (b) × number of parts by weight of hydroxyl group-containing polyolefin (b) in the adhesive relative to 100 parts by weight of polyolefin (a) (I)
[5] The adhesive tape according to any one of [1] to [4] above, wherein the adhesive further comprises a tackifier (d) at 0.05 to 100 parts by weight relative to 100 parts by weight of the polyolefin (a).
[6] The adhesive tape according to any one of [1] to [5] above, wherein the polyolefin (a) is a polymer having a constitutional unit derived from at least one kind selected from the group consisting of propylene, butene, hexene and octene.
[7] The adhesive tape according to any one of [1] to [6] above, wherein the adhesive layer has a thickness of 1 to 100 µm.

### Effect of the Invention

The adhesive tape for surface protection of the present invention allows adhesive deposits to be prevented effectively. The adhesive layer of the adhesive tape for surface protection of the present invention has an excellent anchor property.

### Brief Description of the Drawings

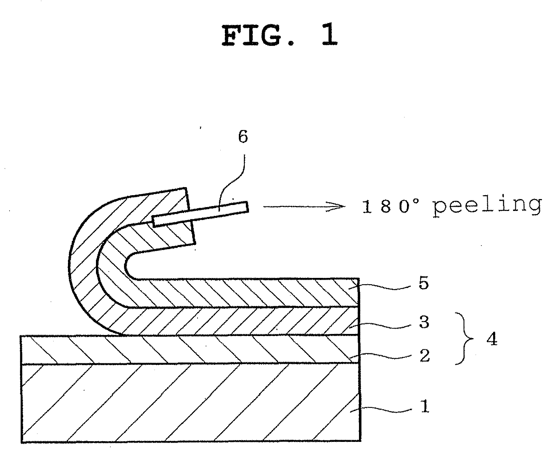

FIG. 1 is a schematic drawing showing how to peel the adhesive layer from the substrate in the adhesive tape in evaluating the anchor properties of the adhesive tapes prepared in Examples and Comparative Examples.

### [Modes for Embodying the Invention]

The adhesive tape for surface protection of the present invention has a substrate and an adhesive layer. Described below are the various ingredients of the adhesive that forms the adhesive layer [polyolefin (a), hydroxyl group-containing polyolefin (b), crosslinking agent (c) and optional ingredients], followed by an explanation of the adhesive layer and the substrate.

### [Polyolefin (a)]

The adhesive for the present invention contains one or more kinds of polyolefin (a). In the present invention, "a polyolefin" means a polymer having an olefin-derived constitutional unit, and "olefins" include aromatic vinyl compounds such as styrene. Furthermore, "a polymer" as mentioned in the present invention refers to both a homopolymer and a copolymer. The polyolefin (a) may be any polyolefin that can be applied to the substrate in solution in an organic solvent along with other ingredients.

The polyolefin (a) is exemplified by α-olefin homopolymers formed from one monomer selected from the group consisting of ethylene, propylene and C₄₋₂₀ α-olefins. Examples of C₄₋₂₀ α-olefins include 1-butene, 1-pentene, 3-methyl-1-butene, 1-hexene, 4-methyl-1-pentene, 3-methyl-1-pentene, 1-heptene, 1-octene, 1-decene, 1-dodecene and the like. The α-olefin homopolymer is preferably a propylene homopolymer (polypropylene as defined in the narrow sense). Propylene homopolymers include, for example, amorphous polypropylenes and the like.

Other examples of the polyolefin (a) include α-olefin copolymers formed from at least two monomers selected from the group consisting of ethylene, propylene and C₄₋₂₀ α-olefins, with preference given to copolymers comprising ethylene as the main monomer (i.e., ethylene-based α-olefin copolymers) and copolymers comprising propylene as the main monomer (i.e., propylene-based α-olefin copolymers). The α-olefin copolymer may be any of a random copolymer, block copolymer, and graft copolymer.

The amount of ethylene constitutional units in an ethylene-based α-olefin copolymer is, for example, 50 to 95 mol%, preferably 70 to 95 mol%. The α-olefin constitutional units contained in an ethylene-based α-olefin copolymer are preferably those formed from at least one monomer selected from the group consisting of 1-butene, propylene, 1-hexene, and 1-octene. Ethylene-based α-olefin copolymers of greater preference include ethylene-1-butene copolymers and ethylene-propylene copolymers. Such ethylene-1-butene copolymers may contain a constitutional unit derived from an α-olefin other than ethylene and 1-butene at 10 mol% or less. Likewise, ethylene-propylene copolymers may contain a constitutional unit derived from an α-olefin other than ethylene and propylene at 10 mol% or less. Such a copolymer can be produced by, for example, copolymerizing ethylene and an α-olefin using a catalyst consisting of a transition metal catalytic component (e.g., vanadium compounds, zirconium compounds) and an organic aluminum compound catalytic component.

The amount of propylene constitutional units in a propylene-based α-olefin copolymer is, for example, between more than 50 mol% and not more than 95 mol%, preferably 70 to 95 mol%. The α-olefin constitutional units contained in a propylene-based α-olefin copolymer are preferably those formed from at least one monomer selected from the group consisting of ethylene, 1-butene, 1-hexene, and 1-octene. Propylene-based α-olefin copolymers of greater preference are propylene-ethylene random copolymers. The propylene-ethylene random copolymers may contain a constitutional unit derived from an α-olefin other than propylene and ethylene at 10 mol% or less. A propylene-based α-olefin copolymer can be produced by, for example, using a metallocene-based catalyst, as described in JP-A-2000-191862.

Commercially available α-olefin copolymers can be used in the present invention. Commercially available ethylene-based α-olefin copolymers include, for example, the TAFMER P series and the TAFMER A series (both manufactured by Mitsui Chemicals, Inc.), ENGAGE (manufactured by Dow Chemical Co.) and the like. Commercially available propylene-based α-olefin copolymers include, for example, the TAFMER XM series (manufactured by Mitsui Chemicals, Inc.) and the like.

A polymethylpentene can also be used as the polyolefin (a). Polymethylpentenes include homopolymers of 4-methyl-1-pentene and copolymers of 4-methyl-1-pentene and another α-olefin. The amount of 4-methyl-1-pentene constitutional units in a polymethylpentene copolymer is preferably 50 to 95 mol%, more preferably 70 to 95 mol%. The polymethylpentene may be a crystalline polymer. The α-olefin constitutional units in a polymethylpentene copolymer are preferably, for example, those derived from a C₂₋₂₀ α-olefin, such as ethylene, propylene, 1-butene, 1-hexene, 1-octene, 1-decene, 1-tetradecene, or 1-octadecene. Greater preference is given to 1-decene, 1-tetradecene and 1-octadecene, which exhibit good copolymerizability with 4-methyl-1-pentene. Commercially available polymethylpentenes include, for example, TPX-S (a 4-methyl-1-pentene-α-olefin copolymer manufactured by Mitsui Chemicals, Inc.).

The polyolefin (a) may also be any diene rubber that is soluble in organic solvents, exemplified by polyisoprenes and polybutadienes. These polyisoprenes preferably have a cis-1,4 linkage ratio of 90% or more and a Mooney viscosity (ML1+4 at 100°C) of 40 to 70. Commercially available polyisoprenes include, for example, IR-307 and IR-310 (manufactured by Kraton Performance Polymers Co.). These polybutadienes preferably have a cis-1,4 linkage ratio of 90% or more and a Mooney viscosity (ML1+4 at 100°C) of 25 to 50. Commercially available polybutadienes include, for example, Nipol BR1220 and Nipol BR1220L (manufactured by Nippon Zeon Co.), and BR01 (manufactured by JSR Co.).

The polyolefin (a) is also exemplified by hydrides of block copolymers of a block A composed mainly of a constitutional unit derived from an aromatic vinyl compound (hereinafter sometimes abbreviated as an aromatic vinyl compound unit) and a block B consisting of a constitutional unit derived from isoprene (hereinafter sometimes abbreviated as isoprene unit) and a constitutional unit derived from 1,3-butadiene (hereinafter sometimes abbreviated as 1,3-butadiene unit) (hereinafter sometimes abbreviated as hydrogenated TPE).

Aromatic vinyl compounds include, for example, styrene, α-methylstyrene, o-methylstyrene, m-methylstyrene, p-methylstyrene, t-butylstyrene, N,N-dimethyl-p-aminoethylstyrene, N,N-diethyl-p-aminoethylstyrene, divinylbenzene, vinylpyridine and the like. These may be used alone or in combination of two kinds or more. When using two kinds or more of aromatic vinyl compounds, they may have formed a block structure or a random structure in the block A.

The block A is composed mainly of aromatic vinyl compound units, and may contain constitutional units derived from a diene hydrocarbon such as isoprene or butadiene. The amount of these constitutional units derived from diene hydrocarbons is preferably 20% by weight or less in the block A. When this amount exceeds 20% by weight, adhesive deposits tend to occur due to cohesive force reductions. These diene hydrocarbons may have formed a block structure or a random structure in the block A.

The block B consists of isoprene units and 1,3-butadiene units. The state of polymerization of isoprene and 1,3-butadiene may be any of random copolymerization, block copolymerization and tapered block copolymerization. It is preferable that the ethylenic double bond in each isoprene unit and 1,3-butadiene unit be hydrogenated, and that the hydrogenation ratio be 90% or more. This hydrogenation ratio is more preferably 95% or more, more preferably 97% or more. When the hydrogenation ratio is less than 90%, the weather resistance of the adhesive layer tends to decrease, which in turn leads to the tendency toward adhesive deposits on the adherend upon peeling.

Commercial products of hydrogenated TPEs can be used in the present invention. Commercially available hydrogenated TPEs include, for example, SEPTON 4030 (a hydride of styrene-1,3-butadiene-isoprene-styrene block copolymer; amount of styrene constitutional units in the copolymer: 13% by weight; amount of 1,3-butadiene constitutional units in the 1,3-butadiene-isoprene block: 45% by weight) and SEPTON 4033 (a hydride of styrene-1,3-butadiene-isoprene-styrene block copolymer; amount of styrene constitutional units in the copolymer: 30% by weight; amount of 1,3-butadiene constitutional units in the 1,3-butadiene-isoprene block: 50% by weight) manufactured by Kuraray Co. and the like.

As polyolefin (a), a styrene-based thermoplastic elastomer may be used. Examples of the styrene-based thermoplastic elastomer include styrene-based AB-type diblock copolymers (diblock copolymers) such as styrene-butadiene copolymer (SB), styrene-isoprene copolymer (SI), styrene-butylene copolymer and the like; styrene-based ABA-type block copolymers (triblock copolymers) such as styrene-butadiene-styrene copolymers (SBS), styrene-isoprene-styrene copolymers (SIS), styrene-butylene-styrene copolymers and the like; styrene-based ABAB-type block copolymers (tetrablock copolymers) such as styrene-butadiene-styrene-butadiene copolymer (SBSB), styrene-isoprene-styrene-isoprene copolymer (SISI) and the like; styrene-based ABABA-type block copolymers (pentablock copolymers) such as styrene-butadiene-styrene-butadiene-styrene copolymers (SBSBS), styrene-isoprene-styrene-isoprene-styrene copolymers (SISIS) and the like; multi-block copolymers having a constitutional unit of not less than the above; styrene-butadiene copolymer; styrene-isoprene random copolymer; and the like.

As the styrene-based thermoplastic elastomer, a product with a hydrogenated ethylenic double bond is preferably used from the aspects of weather resistance. Examples of such hydride include hydrides of AB-type diblock copolymer such as styrene-ethylene-butylene copolymer (SEB), styrene-ethylene-propylene copolymer (SEP) and the like; hydrides of ABA-type triblock copolymer or ABAB-type tetrablock copolymer such as styrene-ethylene-butylene copolymer-styrene (SEBS), styrene-ethylene-propylene copolymer-styrene (SEPS), styrene-ethylene-butylene copolymer-styrene-ethylene-butylene copolymer (SEBSEB) and the like; styrene-ethylene-butylene random copolymer (HSBR); and the like.

As the styrene-based thermoplastic elastomer, styrene-based random copolymers such as styrene-butadiene rubber (SBR) and the like, ABC-type styrene-olefin crystal-based block copolymers such as styrene-ethylene-butylene copolymer-olefin crystal (SEBC) and the like; and hydrides thereof can be mentioned.

When using a mixture of a hydrogenated TPE and a styrene-based thermoplastic elastomer as polyolefin (a), the content of the styrene-based thermoplastic elastomer is preferably 50% by weight or less, more preferably 30% by weight or less, in the sum of the hydrogenated TPE and the styrene-based thermoplastic elastomer. When this content is 50% by weight or less, adhesive deposits on the adherend can be suppressed satisfactorily.

The polyolefin (a) is also exemplified by isobutylene-based polymers. The isobutylene-based polymers may be isobutylene homopolymers or isobutylene copolymers (i.e., copolymers of isobutylene and another monomer). The amount of isobutylene-derived constitutional units in the isobutylene copolymer is preferably 50% by weight or more. Isobutylene copolymers include, for example, random copolymers of isobutylene and n-butylene, and copolymers of isobutylene and isoprene (regular butyl rubber, chlorinated butyl rubber, brominated butyl rubber, partially crosslinked butyl rubber and the like), as well as vulcanizates and modified products thereof and the like. The isobutylene-based polymer is preferably the homopolymer polyisobutylene.

The polyolefin (a) is preferably a polymer having a constitutional unit derived from at least one kind selected from the group consisting of propylene, butene (also known as butylene), hexene and octene [hereinafter referred to as polyolefin (a-1)]. The butene, hexene and octene may be linear or branched. Polyolefin (a-1) may be a homopolymer or a copolymer. Polyolefin (a-1) is exemplified by the above-described propylene homopolymers (polypropylenes in the narrow sense), propylene-based α-olefin copolymers, hydrogenated TPEs, isobutylene-based polymers and the like. In particular, propylene homopolymers (polypropylenes), hydrogenated TPEs and isobutylene-based polymers are preferable, with greater preference given to propylene homopolymers (polypropylenes) and polyisobutylenes.

The number average molecular weight (Mn) of the polyolefin (a) is preferably 3,000 to 1,000,000, more preferably 4,000 to 800,000. When the number average molecular weight is less than 3,000, the cohesive force may decrease, allowing adhesive deposits to remain on the adherend in some cases when the tape is laminated again. When the same exceeds 1,000,000, the adhesive force may decrease, making it difficult to obtain a desired adhesive force.

The content of the polyolefin (a) in the adhesive is preferably 10 to 99.95% by weight, more preferably 20 to 99.5% by weight. When the content is less than 10% by weight, the adhesive force may decrease, which in turn may making it difficult to obtain a desired adhesive force. When the same exceeds 99.95% by weight, the adhesion to the substrate may worsen. The "adhesive" which is the basis for calculating the content does not include the amount of organic solvent.

### [Hydroxyl group-containing polyolefin (b)]

The adhesive for the present invention contains one or more kinds of hydroxyl group-containing polyolefin (b). The hydroxyl group-containing polyolefin (b) is used to be reacted with the crosslinking agent (c) when forming an adhesive layer. The hydroxyl group-containing polyolefin (b) is preferably one having good compatibility with polyolefins.

The number average molecular weight (Mn) of the hydroxyl group-containing polyolefin (b) is preferably 500 to 500,000, more preferably 1,000 to 200,000, still more preferably 1,200 to 150,000. When the number average molecular weight of the hydroxyl group-containing polyolefin (b) exceeds 500,000, the polyolefin (b) is almost insoluble in the layer with the crosslinking agent (c) as the major ingredient [i.e., a layer with a low content of polyolefin (a)] in the adhesive layer because of the low solubility with the crosslinking agent (c), whereas the hydroxyl group-containing polyolefin (b) mostly dissolves in the layer with the polyolefin (a) as the major ingredient and hence becomes unlikely to react with the crosslinking agent (c), which in turn may make it difficult to obtain satisfactory anchor property. Conversely, when the number average molecular weight of the hydroxyl group-containing polyolefin (b) is less than 500, the hydroxyl group-containing polyolefin (b) is likely to bleed out on the surface of the adhesive layer at high temperatures, which in turn may worsen the adhesive characteristics.

Hydroxyl group-containing polyolefin (b) is not particularly limited and, for example, polyethylene-based polyol, polypropylene-based polyol, polybutadiene polyol, hydrogenated polybutadiene polyol, polyisoprene polyol, and hydrogenated polyisoprene polyol and the like can be mentioned. Of these, hydrogenated polyisoprene polyol, polyisoprene polyol, polybutadiene polyol and hydrogenated polybutadiene polyol are preferable from the aspect of the compatibility with polyolefin (a).

It is preferable from the viewpoint of the strength of the adhesive layer that the hydroxyl value (mg KOH/g) of the hydroxyl group-containing polyolefin (b) be 5 or more. From the viewpoint of the adhesive force of the adhesive layer, the hydroxyl value is preferably 95 or less. The hydroxyl value (mg KOH/g) of the hydroxyl group-containing polyolefin (b) is more preferably 10 to 80.

As hydroxyl group-containing polyolefin (b), a commercially available product can be used. Examples of such commercially available product include Poly bd R-45HT (liquid polybutadiene having hydroxyl group on the terminal, number average molecular weight 2800, hydroxyl value 46.6 mg KOH/g, manufactured by Idemitsu Kosan Co., Ltd.), Poly ip (liquid polyisoprene having hydroxyl group on the terminal, number average molecular weight 2500, hydroxyl value 46.6 mg KOH/g, manufactured by Idemitsu Kosan Co., Ltd.), Epole (liquid hydrogenated polyisoprene having hydroxyl group on the terminal, number average molecular weight 2500, hydroxyl value 50.5 mg KOH/g, manufactured by Idemitsu Kosan Co., Ltd.), GI-1000 (liquid polybutadiene having hydroxyl group, number average molecular weight 1500, hydroxyl value 60 - 75 mg KOH/g, manufactured by Nippon Soda Co., Ltd.), GI-2000 (liquid hydrogenated polybutadiene having hydroxyl group, number average molecular weight 2100, hydroxyl value 40 - 55 mg KOH/g, manufactured by Nippon Soda Co., Ltd.), GI-3000 (liquid polybutadiene having hydroxyl group, number average molecular weight 3000, hydroxyl value 25 - 35 mg KOH/g, manufactured by Nippon Soda Co., Ltd.), UNISTOLE P-801 (polyolefin having hydroxyl group, number average molecular weight not less than 5000, hydroxyl value 40 mg KOH/g, manufactured by Mitsui Chemicals, Inc.), UNISTOLE P-901 (polyolefin having hydroxyl group, number average molecular weight not less than 5000, hydroxyl value 50 mg KOH/g, manufactured by Mitsui Chemicals, Inc.) and the like.

The content of the hydroxyl group-containing polyolefin (b) in the adhesive is set so that the value of A represented by the following formula (I) will be preferably 0.25 to 14250, more preferably 0.5 to 12000, still more preferably 1 to 2500. A = hydroxyl value (mg KOH/g) of hydroxyl group-containing polyolefin (b) × number of parts by weight of hydroxyl group-containing polyolefin (b) in the adhesive relative to 100 parts by weight of polyolefin (a) (I)
When the value of A is smaller than 0.25, the strength of the adhesive layer tends to be insufficient. When the same is greater than 14250, the adhesive force tends to decrease.

### [Crosslinking agent (c)]

The adhesive for the present invention contains one or more kinds of crosslinking agent (c). The crosslinking agent (c) is used to be reacted with the hydroxyl group-containing polyolefin (b) when forming an adhesive layer. For this reason, the crosslinking agent (c) must have a functional group capable of reacting with the hydroxyl group. Functional groups capable of reacting with the hydroxyl group include, for example, the isocyanate group (also called isocyanato group) and the carboxy group. From the viewpoint of reactivity, the functional group capable of reacting with the hydroxyl group is preferably the isocyanate group. Hence, the crosslinking agent (c) is preferably an isocyanate.

Isocyanate may be any of aromatic isocyanate and aliphatic isocyanate. Isocyanate is preferably aromatic isocyanate.

From the aspects of the strength and the like of the adhesive layer, isocyanate is preferably polyisocyanate having not less than 3 isocyanate groups in one molecule, more preferably at least one selected from a group consisting of aromatic polyisocyanate and aliphatic polyisocyanate, still more preferably at least one selected from a group consisting of an adduct of an aromatic diisocyanate with a polyvalent alcohol and an adduct of an aliphatic diisocyanate with a polyvalent alcohol.

Examples of aromatic diisocyanate include tolylene diisocyanate, diphenylmethane diisocyanate, 1,5-naphthylene diisocyanate, tolidine diisocyanate, xylylene diisocyanate, tetramethylxylylene diisocyanate and the like. Of these, tolylene diisocyanate is preferable from the aspects of reactivity and anchor property of the obtained adhesive layer.

Examples of aliphatic diisocyanate include 1,6-hexamethylene diisocyanate, 1,4-tetramethylene diisocyanate, 2-methyl-1,5-pentane diisocyanate, 3-methyl-1,5-pentane diisocyanate, lysine diisocyanate, isophorone diisocyanate, cyclohexyldiisocyanate, hydrogenated tolylene diisocyanate, hydrogenated xylene diisocyanate, hydrogenated diphenylmethane diisocyanate, hydrogenated tetramethylxylene diisocyanate and the like. Of these, 1,6-hexamethylene diisocyanate is preferable from the aspects of reactivity and anchor property of the obtained adhesive layer.

Examples of polyvalent alcohol include aliphatic polyvalent alcohol such as ethylene glycol, glycerol, trimethylolpropane, pentaerythritol, ditrimethylolpropane, dipentaerythritol and the like, and the like. Of these, trimethylolpropane is preferable.

Examples of polyisocyanate include a compound having an isocyanate group on the terminal obtained by reacting the aforementioned polyvalent alcohol and an excess amount of the aforementioned diisocyanate.

In addition, a multimer (e.g., isocyanurate product) of aromatic diisocyanate or aliphatic diisocyanate can be used as polyisocyanate.

The content of the crosslinking agent (c) is preferably 0.01 to 150 parts by weight, more preferably 0.01 to 20 parts by weight, still more preferably 0.05 to 10 parts by weight, relative to 100 parts by weight of the polyolefin (a). When the content is less than 0.01 parts by weight, the anchor property (i.e., adhesiveness to a substrate) of the adhesive layer may decrease. When the same exceeds 150 parts by weight, adverse effects may arise, including shortening of the pot life of the adhesive solution and reductions of the adhesiveness (i.e., adhesiveness to the adherend) of the adhesive layer.

### [Optional ingredients of the adhesive]

The adhesive may contain one or more kinds of optional ingredients. Optional ingredients include, for example, urethane catalysts for promoting the reaction of the hydroxyl group-containing polyolefin (b) and isocyanate [i.e., crosslinking agent (c)]; tackifiers (d) for improving the adhesive force (i.e., adhesiveness to the adherend) of the adhesive layer; and the like.

### [Urethane catalyst]

The adhesive may contain one or more kinds of urethane catalysts. Urethane catalysts include, for example, tin compounds such as dibutyltin dilaurate and dioctyltin dilaurate; carboxylates of metals such as zinc, cobalt, copper, and bismuth; amine compounds such as 1,4-diazabicyclo[2.2.2]octane; chelate compounds of metals such as iron, titanium, and zirconium; and the like. Salts of bismuth with organic acid (salts of bismuth with alicyclic organic acids such as salts of bismuth with resin acids containing abietic acid, neoabietic acid, d-pimaric acid, iso-d-pimaric acid, or podocarpic acid, or a combination of two kinds or more thereof, as the major ingredient; salts of bismuth with aromatic organic acids such as benzoic acid, cinnamic acid, and p-oxycinnamic acid; and the like) can also be used. In particular, from the viewpoint of compatibility with the adhesive and urethanization reactivity, iron chelate compounds, dibutyltin dilaurate, dioctyltin dilaurate, and salts of bismuth with resin acids are preferable, with greater preference given to iron chelate compounds for their reactivity.

The content of the urethane catalyst is preferably 0.001 to 2.0 parts by weight, more preferably 0.005 to 1.5 parts by weight, still more preferably 0.008 to 1.0 parts by weight, relative to 100 parts by weight of the polyolefin (a). When the content is less than 0.001 parts by weight, the catalyst effect may be insufficient. When the content exceeds 2.0 parts by weight, drawbacks may arise, such as shortening of the pot life of the adhesive solution. As mentioned herein, the content of catalyst means the amount of the catalyst (i.e., active ingredient) only; when using, for example, a commercially available catalyst solution, the content means the amount of the catalyst only, excluding the amount of the solvent.

### [Tackifier (d)]

The adhesive may contain one or more kinds of tackifier (d). The tackifier (d) is effective in improving the adhesiveness, particularly in improving the adhesiveness to adherends with rough surfaces. The content of the tackifier (d) in the adhesive is preferably 0.05 to 100 parts by weight, more preferably 0.07 to 50 parts by weight, still more preferably 0.1 to 10 parts by weight, relative to 100 parts by weight of the polyolefin (a). When the content is not less than 0.05 parts by weight, the adhesiveness to adherends with rough surfaces improves, which in turn effectively suppresses the rise of the adhesive tape from the adherend. However, when the content exceeds 100 parts by weight, considerable adhesive deposits may occur at high temperatures.

The tackifier (d) may be one that is publicly known in the field of adhesives. Examples of the tackifier (d) include petroleum-based resins (e.g., aliphatic resins, aromatic resins, aliphato-aromatic resins, alicyclic resins and the like), chromane-indene-based resins, terpene-based resins, terpenephenol-based resins, rosin-based resins (e.g., polymerized rosin and the like), phenol-based resins, alkylphenol-based resins, xylene-based resins, hydrides thereof, and the like. From the viewpoint of detachability, weather resistance and the like, it is preferable that the tackifier (d) be a hydride.

Commercial products of the tackifier (d) can be used. Commercial products of the tackifier (d) include, for example, YS Polystar T100 (a terpenephenol-based resin manufactured by YASUHARA CHEMICAL CO., LTD.), PINECRYSTAL KR-85 (a rosin-based resin manufactured by Arakawa Chemical Industries, Ltd.), Durez 19900 (an alkylphenol-based resin manufactured by Sumitomo Durez Co., Ltd.) and the like. As combinations of the polyolefin (a) and the tackifier (d), commercially available blends thereof can be used.

### [Other optional ingredients]

Other optional ingredients that can be blended in the adhesive include, for example, softeners, pigments, fillers, antioxidants, light stabilizers (radical scavengers, ultraviolet absorbents and the like), other stabilizers and the like. Softeners include, for example, processed oils, petroleum-based softeners and the like. Pigments or fillers include, for example, inorganic powders such as of titanium oxide, zinc oxide, calcium oxide, magnesium oxide, and silica. Antioxidants include, for example, those with alkylphenols, alkylenebisphenols, thiopropionates, organic phosphites, amines, hydroquinones, hydroxylamines and the like as active ingredients. Light stabilizers include, for example, those with benzotriazoles, hindered amines, benzoates and the like as active ingredients. Other optional ingredients may be used alone or in combination of two kinds or more. The content of the other optional ingredients in the adhesive is similar to usual amounts in the field of adhesives.

### [Adhesive layer]

The adhesive layer can be formed by, for example, dissolving the above-described adhesive ingredients in a solvent to yield an adhesive solution, and applying and drying the resulting adhesive solution on a substrate. The solid content of the adhesive solution is not subject to limitations in the present invention, and is normally in the range of 5 to 50% by weight.

The choice of solvent is not subject to limitations, as far as the adhesive ingredients are uniformly soluble therein. Because the adhesive for the present invention contains a polyolefin (a), however, it is preferable that the solvent be one kind of hydrocarbon-based solvent alone, or a mixed solvent of two kinds or more of hydrocarbon-based solvents, or a mixed solvent of a hydrocarbon-based solvent and other solvent. When using a mixed solvent, the content of the hydrocarbon-based solvent is preferably 50% by weight or more, more preferably 70% by weight or more, still more preferably 90% by weight or more, in the mixed solvent. Hydrocarbon-based solvents include, for example, aliphatic hydrocarbons such as n-hexane and n-heptane; alicyclic hydrocarbons such as cyclohexane; and aromatic hydrocarbons such as toluene and xylene. Other solvents include, for example, ketones such as methyl ethyl ketone, cyclohexanone, and acetylacetone; esters such as ethyl acetate; alcohols such as methanol, ethanol, and isopropyl alcohol; and the like.

A method for applying the adhesive solution is not particularly limited, and any publicly known method can be used; for example, methods using kiss-roll coaters, bead coaters, rod coaters, Mayer bar coaters, die coaters, gravure coaters and the like can be used. Also for drying the adhesive solution, any publicly known method can be used. An ordinary method of drying is hot blow drying. Hot blow drying temperature can vary depending on the heat resistance of the substrate, and is normally about 60 to 150°C.

The thickness of the adhesive layer in the adhesive tape (i.e., dried thickness) is preferably 1 to 100 µm, more preferably 2 to 80 µm, still more preferably 3 to 60 µm. When the thickness is less than 1 µm, the adhesiveness (i.e., adhesiveness of the adhesive layer to the adherend) may be insufficient. When the thickness exceeds 100 µm, cohesion failures may occur in the adhesive layer when removing the tape from the adherend, which in turn may cause adhesive deposits on the adherend.

### [substrate]

In the present invention, the choice of substrate is not subject to limitations; a variety of substrates can be used. The substrate is preferably a resin film composed mainly of a resin such as polyolefin or polyester [e.g., polyethylene terephthalate (PET)]. Generally, "a film" refers to a thin flat object having a maximum thickness of about 250 µm; a thicker flat object is called "a sheet". However, the term "film" as used herein is understood to encompass both an ordinary "film" and a "sheet". From the viewpoint of recyclability and other features, a polyolefin-based resin film with polyolefin as the major ingredient is preferable. The content of polyethylene-based resin (PE resin) and/or polypropylene resin (PP resin) in the polyolefin-based resin film is preferably 50% by weight or more.

More preferable polyolefin-based resin films include PP resin films with PP resin as the major ingredient (i.e., the content of PP resin in the film exceeds 50% by weight). The content of PP resin in the PP resin film is still more preferably 60% by weight or more, particularly preferably 75% by weight or more. From the viewpoint of heat resistance and the like, it is preferable that the PP resin film have a continuous structure (continuous layer) of PP resin formed therein. Using a PP resin film having such a continuous layer formed therein, it is possible to effectively prevent the adhesive tape for surface protection from rising up from the adherend due to thermal hysteresis events such as temperature rises.

The substrate may assume a monolayer structure or a multilayer structure having two or more layers. In the case of a multilayer structure, it is preferable that at least one layer be a film having a continuous layer of PP resin as described above formed therein. The remaining portion of the PP resin film (i.e., ingredients other than PP resin) may be a polyolefin with ethylene or an α-olefin having four or more carbon atoms as the major ingredient, or may be a resin other than polyolefin. The remaining portion of the PP resin film is preferably a PE resin.

The PP resin can be one with one or more kinds of a variety of polymers formed by propylene (propylene-based polymers) as the major ingredient. The PP resin may be substantially comprised of one or more kinds of propylene-based polymer. The scope of propylene-based polymers encompasses, for example, the following:
(1) Propylene homopolymers, e.g., isotactic polypropylenes.
(2) Random copolymers of propylene and other α-olefin (typically one kind or two kinds or more selected from among ethylene and C₄₋₁₀ α-olefins) (random polypropylenes). The amount of propylene in the random polypropylene is preferably 50 mol% or more. Random polypropylenes include, for example, those obtained by randomly copolymerizing propylene at 96 to 99.9 mol% and other α-olefin (preferably ethylene-based and/or butene) at 0.1 to 4 mol%.
(3) Block copolymers containing a block A prepared by copolymerizing propylene with other α-olefin (typically one kind or two kinds or more selected from among ethylene and C₄₋₁₀ α-olefins) and a block B prepared by polymerizing a rubber ingredient (block polypropylenes). It is preferable that the main ingredient of the block A of the block polypropylene be propylene. The block B of the block polypropylene contains at least one kind of propylene and other α-olefin as the minor ingredient. The block polypropylene contains, for example, a block A prepared by block-copolymerizing propylene at 90 to 99.9 mol% with other α-olefin (preferably ethylene and/or butene) at 0.1 to 10 mol% and a block B prepared by polymerizing a rubber ingredient.

The PP resin may be composed substantially of one or more kinds of propylene-based polymer, and may be a thermoplastic olefin resin (TPO) or thermoplastic elastomer (TPE) of the reactor blend type obtained by copolymerizing of a propylene-based polymer with a large amount of rubber ingredient or of the dry blend type obtained by mechanically dispersing a rubber ingredientin in a propylene-based polymer. The PP resin may contain a copolymer of a monomer having in addition to a polymerizable functional group other functional group (functional group-containing monomer) and propylene, and/or a copolymer obtained by copolymerizing such a functional group-containing monomer with a propylene-based polymer.

More preferable polyolefin-based resin films include PE resin films with a PE resin as the major ingredient (i.e., the content of PE resin in the film exceeds 50% by weight). The remaining portion of the PE resin film (i.e., ingredients other than PE resin) may be a polyolefin with an α-olefin having three or more carbon atoms as the major ingredient, or may be a resin other than polyolefin. The remaining portion of the PE resin film is preferably a PP resin.

The PE resin can have various polymers formed by ethylene (ethylene-based polymers) as the major ingredient. The PE resin may be composed substantially of one or more kinds of ethylene-based polymer. The ethylene-based polymer may be a homopolymer of ethylene, and may be one prepared by copolymerizing (random copolymerization, block copolymerization and the like) ethylene as the major ingredient with other α-olefin. The other α-olefin is exemplified by C₃₋₁₀ α-olefins such as propylene, 1-butene), 1-hexene, 4-methyl-1-pentene, and 1-octene. The other α-olefin may be branched. The PE resin may contain a copolymer of a monomer having in addition to a polymerizable functional group other functional group (functional group-containing monomer) and ethylene, and/or a copolymer obtained by copolymerizing such a functional group-containing monomer with an ethylene-based polymer. Copolymers of ethylene and a functional group-containing monomer include, for example, ethylene-vinyl acetate copolymer (EVA), ethylene-acrylic acid copolymer (EAA), ethylene-methacrylic acid copolymer (EMAA), ethylene-methyl acrylate copolymer (EMA), ethylene-ethyl acrylate copolymer (EEA), ethylene-methyl methacrylate copolymer (EMMA), or those prepared by crosslinking ethylene-(meth)acrylic acid (i.e., acrylic acid and/or methacrylic acid) copolymer with metal ions, and the like.

The density of the PE resin is not subject to limitations, and can be, for example, about 0.9 to 0.94 g/cm³. Preferable PE resins include low-density polyethylene (LDPE) and linear low-density polyethylene (LLDPE). The PE resin may contain one or more kinds of LDPE, and/or one or more kinds of LLDPE. The blending ratio of two kinds or more of LDPEs when used in combination, the blending ratio of two kinds or more of LLDPEs when used in combination, and the blending ratio of LDPE and LLDPE when used in combination are not subject to limitations, and can be set as appropriate so that the PE resin obtained will exhibit the desired characteristics.

The MFR of the resin that constitutes the substrate is preferably, but is not limited to, 0.5 to 80 g/10 minutes, more preferably 0.5 to 10 g/10 minutes. Here, MFR refers to a measured value obtained at 230°C under a load of 21.18 N using JIS K7210 Method A. For example, PP resins and/or PE resins having an MFR falling in these ranges can be used.

The resin film (preferably a polyolefin-based resin film) used as the substrate may contain other acceptable ingredients depending on light-blocking effect, weather resistance, heat resistance, film fabrication stability, adhesive characteristics and the like. Such other acceptable ingredients include, for example, pigments (typically inorganic pigments), fillers, antioxidants, light stabilizers (e.g., radical scavengers, ultraviolet absorbents and the like), slipping agents, antiblocking agents and the like. Inorganic pigments or fillers include, for example, inorganic powders such as titanium oxides (e.g., rutile type titanium dioxide and the like), zinc oxide and calcium carbonate. A content of inorganic pigments and fillers can be set as appropriate according to the degree of the effects obtained therewith and the choice of method of forming the resin film (cast molding, inflation molding and the like). The content of inorganic pigments and fillers in the resin film (total amount) is, for example, about 2 to 20 parts by weight (preferably about 5 to 15 parts by weight), relative to 100 parts by weight of the resin. The content of the acceptable ingredients other than inorganic pigments and fillers are similar to usual contents in the relevant field.

The resin film (preferably a polyolefin-based resin film) can be produced by publicly known film forming methods. The forming methods include, for example, extrusion molding of a resin (preferably a resin containing PP resin alone, or a resin containing PP resin as the major ingredient and PE resin as the minor ingredient) and other acceptable ingredients blended as required.

The surface of the substrate (typically a resin film) on which the adhesive layer is formed may have been surface-treated such as by acid treatment, corona discharge treatment, ultraviolet irradiation treatment, and plasma treatment. The thickness of the substrate is not subject to limitations, and can be chosen as appropriate according to the purpose. The thickness of the substrate is normally about 300 µm or less, for example, about 10 to 200 µm, preferably about 10 to 100 µm, more preferably about 20 µm to 60 µm.

### [Mode of embodying the adhesive tape]

The adhesive tape of the present invention may assume any of a form wherein a long tape is wound like a roll, and a form wherein cut pieces of appropriate size of a long tape are stacked.

The adhesive tape of the present invention may have a release agent layer to protect the adhesive layer. For example, the adhesive tape of the present invention may have a release agent layer on the substrate on the side opposite to the adhesive layer (i.e., the "adhesive layer / substrate /release agent layer" configuration). In this configuration, the release agent layer is sometimes called a back coating layer, and the adhesive tape is sometimes called an adhesive tape with a back coating layer.

To protect the adhesive layer of the adhesive tape of the present invention, a release material having a release agent layer formed on the substrate thereof may be used. Specifically, by bringing into mutual contact the adhesive layer of the adhesive tape of the present invention and the release agent layer of the release material, the adhesive layer may be protected (i.e., the "substrate of adhesive tape/adhesive layer/release agent layer/substrate of release material" configuration). An adhesive tape in this configuration is also called an adhesive tape with a release material.

### [Applications]

Applications for the adhesive tape for surface protection of the present invention include, for example, protection of metal plates (e.g., SUS plates), resin plates and the like, protection of products configured with metal plates or resin plates and parts thereof, and protection of coatings on metal plates, resin plates, products thereof, and parts thereof, and the like. Such products include, for example, electric appliances (e.g., TV sets and mobile phones and the like) and vehicles (e.g., automobiles, electric trains, airplanes and the like) and the like.

### [Physical properties, characteristics and the like]

The values of physical properties, characteristics and the like given herein are measured values obtained by the methods shown below.
(1) Number average molecular weight A value determined in accordance with ASTM D2503.
(2) Hydroxyl value A value determined in accordance with JIS K1557:1970. Examples

The present invention is hereinafter described more specifically by means of the following Examples and Comparative Examples, which, however, do not limit the scope of the invention. In the description below, "parts" and "%" indicate "parts by weight" and "% by weight", respectively, unless otherwise specified.

### [Preparation of adhesive solution]

Various ingredients were blended in the numbers of parts shown in Tables 1 and 2, and this mixture was dissolved in toluene to yield an adhesive solution having a solid content of 16%. The numbers of parts of the various ingredients shown in Tables 1 and 2 do not include the solvent. Hence, the numbers of parts shown in Tables 1 and 2 indicate the numbers of parts of the ingredients themselves (solid contents) contained in the solution, provided that the ingredients are obtained in solution. Also shown in Tables 1 and 2 are values of A in the formula (I) above.

Abbreviations of each component in Tables 1 and 2 mean the following.
(1) polyolefin (a)
   B80: "Oppanol B80" (polyisobutylene, number average molecular weight 180,000) manufactured by BASF Japan Ltd.
   B12: "Oppanol B12" (polyisobutylene, number average molecular weight 13,000) manufactured by BASF Japan Ltd.
(2) hydroxyl group-containing polyolefin (b)
   Epole: "Epole " (liquid hydrogenated polyisoprene having hydroxyl group on the terminal, number average molecular weight 2500, hydroxyl value 50.5 mg KOH/g) manufactured by Idemitsu Kosan Co., Ltd.
(3) crosslinking agent (c)
   C/L: "CORONATE L" (75% ethyl acetate solution of adduct of tolylene diisocyanate with trimethylolpropane, isocyanate group number in one molecule: 3) manufactured by Nippon Polyurethane Industry Co., Ltd. C/HL: "CORONATE HL" (75% ethyl acetate solution of adduct of hexamethylene diisocyanate with trimethylolpropane, isocyanate group number in one molecule: 3) manufactured by Nippon Polyurethane Industry Co., Ltd.
   TSS-100: "DURANATE TSS-100" (isocyanurate adduct of hexamethylene diisocyanate, isocyanate group content: 17.6%) manufactured by Asahi Kasei Chemicals Corporation
(4) urethane catalyst
   DBTDL: "dibutyltin(IV) dilaurate" (dibutyltin dilaurate) manufactured by Wako Pure Chemical Industries, Ltd.
   Fe (C₅H₇O₂)₃: "Nacem Ferric Iron" (iron-chelating compound) manufactured by NIHON KAGAKU SANGYO CO., LTD.
(5) tackifier (d)
   T100: "YS Polystar T100" (terpene phenol-based resin) manufactured by YASUHARA CHEMICAL CO., LTD.
   KR-85: "PINECRYSTAL KR-85" (rosin-based resin) manufactured by Arakawa Chemical Industries, Ltd.
   Durez: "Durez19900" (alkylphenol-based resin) manufactured by Sumitomo Durez Co., Ltd.

### [Preparation of adhesive tape (formation of adhesive layer)]

The resulting adhesive solution was applied over each substrate shown in Tables 1 and 2 using a Baker applicator. This was followed by heating in a hot blow drier at 80°C for 90 seconds to yield an adhesive tape. The adhesive solution was applied so that the adhesive layer would be 5 µm thick after drying.

Abbreviations of substrates in Tables 1 and 2 mean the following.
(1) PET
   "LUMIRROR S10" (poly(ethylene terephthalate) film, thickness 25 µm) manufactured by Toray Industries, Inc.
(2) PP/PE
   polypropylene/linear low density polyethylene film (thickness 35 µm), which was prepared as below
(3) PP/PE corona
   polypropylene/linear low density polyethylene film (thickness 35 µm) after corona discharge treatment of both surfaces, which was prepared as below

### [Preparation of PP/PE]

A molding material consisting of 80 parts of polypropylene (NOVATEC-PP FY4, manufactured by Japan Polypropylene Corporation) and 20 parts of linear low-density polyethylene (KERNEL KF380, manufactured by Japan Polyethylene Corporation) was kneaded in a molten state using a film forming machine and then extruded from a T-die attached to the forming machine to yield a polypropylene/linear low-density polyethylene film. A release agent layer (about 0.05 µm thick) was formed on the surface (back surface) opposite to the surface of the film for forming an adhesive layer thereon using a long-chain alkyl-based release agent.

### [Preparation of PP/PE corona]

A polypropylene/linear low-density polyethylene film prepared as described in the [Preparation of PP/PE] section was subjected to corona discharge treatment on both surfaces, and a release agent layer (about 0.05 µm thick) was formed on the surface (back surface) opposite to the surface of the film for forming an adhesive layer using a long-chain alkyl-based release agent.

### [Evaluation of adhesive tapes]

The anchor properties, adhesive deposits and adhesiveness of the resulting adhesive tapes were evaluated as described below.

### (1) Anchor effect

An SUS plate was attached as a backing to the substrate of a 20 mm wide cut piece of adhesive tape using a double-coated adhesive tape. The sample adhesive tape and No. 315 Tape (a rubber-based adhesive 19 mm wide manufactured by NITTO DENKO CORPORATION) were laminated together in a way such that the glue surface of No. 315 Tape came into contact with the adhesive layer of this adhesive tape. In this operation, a filler paper cord was sandwiched between these tapes. While the filler paper cord was being carried by a fastener, the No. 315 Tape was pulled in a 180° direction at a speed of 100 m/min using a tensile tester to detach the adhesive layer from the adhesive tape. The force required for the detaching (i.e., the anchoring force required for detaching the adhesive layer from the substrate) was measured. The results are shown in Tables 1 and 2. How to separate the adhesive layer from the substrate of the adhesive tape is schematized in FIG. 1.

Regarding the detachment form of the adhesive layer from the substrate, a sensory evaluation was performed to determine the touch of the adhesive tape substrate surface after removing the adhesive layer. When a touch of the adhesive was felt (i.e., a portion of the adhesive layer remained on the substrate upon removal), the sample was given the rating cohesion failure". When only a touch of the substrate was felt (i.e., the entire adhesive layer was removed), the sample was given the rating "anchor failure". The results are shown in Tables 1 and 2.

### (2) Adhesive deposit

As an adherend for evaluating adhesive deposits on adhesive tapes, an SUS430BA/No. 4 plate was used. Before being adhered to the adhesive tape, the SUS430BA/No. 4 plate was washed in toluene by sonication at 23°C for 30 minutes, and then dried by being allowed to stand in 23°C air for 10 minutes. A 25 mm × 100 mm cut piece of the adhesive tape was laminated on the adherend and pressure-bonded by one reciprocal motion of a 2-kg roller. The adhesive tape bonded to the adherend was stored in air in a hot blow drier at 70°C for 12 hours, and then at -30°C for 12 hours. Subsequently, the adhesive tape was manually pulled by the examiner in -30°C air in a 90° direction at a speed of 150 to 200 m/min, whereby the tape was removed from the adherend. After the removal of the tape, the adherend surface was visually examined for adhesive deposits. Samples with no adhesive deposits were given the rating "good" (O) and those with adhesive deposits were given the rating "poor" (x). The results are shown in Table 1 and 2.

### (3) Adhesiveness

A 20 mm × 100 mm cut piece of the adhesive tape was placed on the adherend (an SUS430BA plate or an acrylic plate) and pressure-bonded by one reciprocal motion of a 2-kg roller. The adhesive tape bonded to the adherend was allowed to stand in 23°C air for 20 to 40 minutes. Subsequently, the adhesive tape was pulled in 23°C air in a 180° direction at a speed of 300 mm/min, and the force required to remove the adhesive tape from the adherend (i.e., adhesive force) was determined using a tensile tester. The results are shown in Tables 1 and 2, wherein "adhesive force 1" refers to the adhesive force obtained with the SUS430BA plate as the adherend, and "adhesive force 2" refers to the adhesive force obtained with the acrylic plate as the adherend.

**Table 1**

| Example | composition of adhesive (part) | A value | substrate | anchor property | | adhesive deposit | adhesiveness * | |
|---|---|---|---|---|---|---|---|---|
| | | | | detachment form | anchoring force (N/19 mm) | | adhesive force 1 (N/20 mm) | adhesive force 2 (N/20 mm) |
| 1 | B80:B12:Epole:C/HL:DBTDL =100:30:2:3:0.2 | 77.7 | PP/PE corona | cohesion failure | 29 < | O | 3.9 | 5.6 |
| 2 | B80:B12:Epole:C/HL:DBTDL:T100 =100:30:2:3:0.05:0.5 | 77.7 | PPP/PE corona | cohesion failure | 27 < | O | 2.2 | 3.6 |
| 3 | B80:B12:Epole:C/HL:DBTDL:T1000 =100:30:0.3:1:0.05:0.5 | 11.7 | PP/PE corona | cohesion failure | 28 < | O | 3.8 | 4.6 |
| 4 | B80:B12:Epole:TSS-100:DBTDL:T100 =100:30:0.3:1:0.05:0.5 | 11.7 | PP/PE corona | cohesion failure | 30 < | O | 3.3 | 3.9 |
| 5 | B80:B12:Epole:C/L:DBTDL:T100 =100:30:0.3:1:0.05:0.5 | 11.7 | PP/PE corona | cohesion failure | 31 < | O | 3.7 | 4.2 |
| 6 | B80:B12:Epole:C/HL:DBTDL:KR-85 =100:30:2:3:0.05:0.5 | 77.7 | PPP/PE corona | cohesion failure | 30 < | O | 2.3 | 3.7 |
| 7 | B80:B12:Epole:C/HL:DBTDL:Durez =100:30:2:3:0.05:0.5 | 77.7 | PP/PE corona | cohesion failure | 31 < | O | 2.4 | 4.1 |
| 8 | B80:B12:Epole:C/HL:DBTDL =100:30:2:5:0.05 | 77.7 | PET | cohesion failure | 39 < | O | 2.2 | 4.2 |
| 9 | B80:B12:Epole:C/L:Fe(C₅H₇O₂)₃ =100:30:2:3:0.2 | 77.7 | PP/PE corona | cohesion failure | 28 < | O | 3.4 | 4.3 |
| 10 | B80:B12:Epole:C/L: Fe (C₅H₇O₂)₃ =100:30:2:3:0.01 | 77.7 | PP/PE corona | cohesion failure | 32 < | O | 3.8 | 5.4 |

| | | | | | | | | |
|---|---|---|---|---|---|---|---|---|
| * adhesive force 1: adherend=SUS430BA plate, adhesive force 2: adherend=acrylic plate | | | | | | | | |

**Table 2**

| Comparative Example | composition of adhesive (part) | A value | substrate | anchor property | | adhesive deposit | adhesiveness * | |
|---|---|---|---|---|---|---|---|---|
| | | | | detachment form | anchoring force (N/19 mm) | | adhesive force 1 (N/20 mm) | adhesive force 2 (N/20 mm) |
| 1 | B80:B12:T100 =100:30:0.5 | - | PP/PE corona | anchor failure | 6.0 | x | 4.5 | 5.1 |
| 2 | B80:B12:C/HL:DBTDL:T100 =100:30:3:0.05:0.5 | - | PP/PE corona | anchor failure | 12.4 | x | 4.4 | 5.4 |
| 3 | B80:B12:T100 =100:30:0.5 | - | PP/PE | anchor failure | 6.8 | x | 4.7 | 5.3 |

| | | | | | | | | |
|---|---|---|---|---|---|---|---|---|
| * adhesive force 1:adherend=SUS430BA plate, adhesive force 2:adherend=acrylic plate | | | | | | | | |

Referring to Table 1, in the adhesive tapes having an adhesive layer formed with an adhesive containing a polyolefin (a), a hydroxyl group-containing polyolefin (b) and a crosslinking agent (c) (Examples 1 to 10), the detachment form between the substrate and the adhesive layer was judged to be a cohesion failure; these tapes were shown to have an excellent anchor property. In contrast, as shown in Table 2, in the adhesive tapes having an adhesive layer formed with an adhesive containing none or only one of the hydroxyl group-containing polyolefin (b) and the crosslinking agent (c) (Comparative Examples 1 to 3), an anchor failure occurred; these tapes were shown to have a poor anchor property.

Furthermore, as shown in Table 1, in the adhesive tapes of Examples 1 to 10, no adhesive deposits were observed (O); adhesive deposits were effectively prevented in the adhesive tape of the present invention.

### Industrial Applicability

The adhesive tape for surface protection of the present invention is useful in protecting metal plates, resin plates, products configured therewith, parts thereof, coatings applied thereto, and the like.

### [Explanation of Symbols]

1 SUS plate
2 substrate
3 adhesive layer
4 adhesive tape
5 "No. 315 tape" manufactured by NITTO DENKO CORPORATION
6 filler paper cord

## Claims

1. An adhesive tape for surface protection, comprising a substrate and an adhesive layer laminated on at least one surface of the substrate, wherein the adhesive layer is made of an adhesive comprising a polyolefin (a), a hydroxyl group-containing polyolefin (b) and a crosslinking agent (c) having a functional group capable of reacting with the hydroxyl group.

2. The adhesive tape according to claim 1, wherein the crosslinking agent (c) is an isocyanate.

3. The adhesive tape according to claim 1 or 2, wherein the content of the crosslinking agent (c) in the adhesive is 0.01 to 150 parts by weight relative to 100 parts by weight of the polyolefin (a) .

4. The adhesive tape according to any one of claims 1 to 3, wherein the value of A represented by the following formula (I) is 0.25 to 14250.
A = hydroxyl value (mg KOH/g) of hydroxyl group-containing polyolefin (b) × number of parts by weight of hydroxyl group-containing polyolefin (b) in the adhesive relative to 100 parts by weight of polyolefin (a) (I)

5. The adhesive tape according to any one of claims 1 to 4, wherein the adhesive further comprises a tackifier (d) at 0.05 to 100 parts by weight relative to 100 parts by weight of the polyolefin (a).

6. The adhesive tape according to any one of claims 1 to 5, wherein the polyolefin (a) is a polymer having a constitutional unit derived from at least one kind selected from the group consisting of propylene, butene, hexene and octene.

7. The adhesive tape according to any one of claims 1 to 6, wherein the adhesive layer has a thickness of 1 to 100 µm.
